# FASCICULE DE BREVET EUROPEEN

(11) **EP 2 435 312 B1**
(45) Date de publication et mention de la délivrance du brevet: **01.07.2015**
(21) Numéro de dépôt: 10728815.1
(22) Date de dépôt: 25.05.2010
(51) Int. Cl.: B64C 1/06, B64C 1/12, B64F 5/00, B29C 33/30, B29C 70/86, B29L 31/30

(54) **INSTALLATION ET PROCÉDÉ DE REALISATION D'UN AÉRONEF**
EINRICHTUNG UND VERFAHREN FÜR DIE HERSTELLUNG EINES FLUGZEUGES
EQUIPMENT AND METHOD FOR PRODUCING AN AIRCRAFT

(30) Priorité: 27.05.2009 FR 0953493
(43) Date de publication de la demande: 04.04.2012
(73) Titulaire: Airbus Operations, 31000 Toulouse (FR)
(72) Inventeur: GALLANT, Guillaume, 31480 Lareole (FR); DELAHAYE, Romain, 31770 Colomiers (FR)
(74) Mandataire: Potdevin, Emmanuel Eric
(86) Numéro de dépôt international: PCT/FR2010/051005
(87) Numéro de publication internationale: WO 2010/136717

(56) Documents cités:
- FR-A1- 2 894 869
- US-A- 3 978 256
- US-A- 5 223 067

## Description

L'invention concerne la réalisation des aéronefs.

Il est connu, notamment du document FR-2 894 869, de réaliser le fuselage d'un avion au moyen de cadres recouverts d'une peau. Les cadres ont une forme circulaire et forment l'armature du fuselage. On dispose les cadres un à un sur un mandrin qui les supporte dans leur position relative finale. Puis les cadres sont reliés les uns aux autres et associés aux autres pièces de l'armature et recouverts de la peau. Toutefois, ce mode de montage engendre des temps de cycle relativement longs et des coûts récurrents élevés.

Un but de l'invention est de réduire les temps de cycle et les coûts récurrents ainsi que de simplifier l'assemblage d'un tronçon du fuselage en l'automatisant.

A cet effet, on prévoit selon l'invention un procédé de réalisation d'un aéronef dans lequel on fait passer au moins un mandrin à travers des cadres portés par un magasin et, au cours du passage, on transfère les cadres sur le mandrin.

Ainsi, on simplifie et on accélère l'opération de mise en place des cadres sur le mandrin. On peut de cette façon réduire les temps de cycle ainsi que les coûts récurrents. Cette simplification de l'assemblage facilite aussi son automatisation.

De préférence:
- on approvisionne le magasin avec des cadres,
- on achemine le magasin, puis
- le magasin étant fixe, on fait passer le mandrin dans les cadres.

Ainsi, on peut approvisionner le magasin à distance de la chaîne d'assemblage, puis transporter ce magasin jusqu'au lieu d'assemblage. L'opération d'approvisionnement ne perturbe donc pas en elle-même le déroulement de l'assemblage.

Avantageusement, on fait passer le mandrin à travers le magasin.

Il est en effet avantageux de disposer d'un magasin supportant les cadres sur la plus grande partie de leur circonférence, laquelle est en général fermée.

De préférence, on effectue le transfert de sorte que les cadres présentent un espacement mutuel sur le mandrin supérieur à leur espacement mutuel dans le magasin, leur espacement mutuel sur le mandrin étant de préférence égal à leur espacement final dans l'aéronef.

Ainsi, on simplifie encore l'assemblage et on favorise davantage son automatisation.

Avantageusement, on fait passer deux mandrins à travers des cadres portés par deux magasins respectifs en déplaçant les mandrins en direction l'un de l'autre.

Ce mode de réalisation est adapté dans le cas d'un tronçon de fuselage présentant une longueur relativement grande par rapport à son diamètre. L'utilisation de deux mandrins permet en effet de réduire le porte-à-faux.

Avantageusement, on fixe les mandrins l'un à l'autre, notamment en les rendant solidaires en rotation.

On améliore ainsi la stabilité de l'ensemble durant la fabrication.

Avantageusement, on rapporte au moins une peau sur les cadres.

On prévoit également selon l'invention une installation de réalisation d'un aéronef, qui comprend :
- au moins un magasin à cadres,
- au moins un mandrin, et
- des moyens pour transférer sur le mandrin des cadres portés par le magasin lors d'un passage du mandrin à travers les cadres.

L'installation selon l'invention pourra présenter en outre au moins l'une quelconque des caractéristiques suivantes :
- les moyens de transfert sont portés par le mandrin ;
- le mandrin comprend des moyens de fixation des cadres au mandrin, ces moyens étant de préférence formés au moins en partie par les moyens de transfert ; et
- les moyens de fixation sont montés mobiles sur le mandrin entre une position rétractée et une position étendue dans laquelle ils s'étendent davantage en saillie du mandrin qu'en position rétractée, une partie des moyens de fixation étant par exemple montée mobile à rotation sur le mandrin autour d'un axe localement parallèle à une direction circonférentielle du mandrin.

D'autres caractéristiques et avantages de l'invention apparaîtront encore dans la description suivante d'un mode de réalisation donné à titre d'exemple non limitatif en référence aux dessins annexés sur lesquels :
- les figures 1 et 2 sont des vues en perspective d'un premier mandrin d'une installation selon l'invention ;
- les figures 3 à 5 sont des vues en perspective d'un deuxième mandrin, d'un magasin et d'un bâti de l'installation ;
- les figures 6, 7, 9, 10, 11 et 12 illustrent des étapes de mise en oeuvre du procédé de l'invention au moyen de l'installation des figures 1 à 5 ; et
- la figure 8 présente des vues en coupe à plus grande échelle suivant le plan VIII-VIII de l'installation illustrée à la figure 7, lors de trois étapes de fonctionnement.

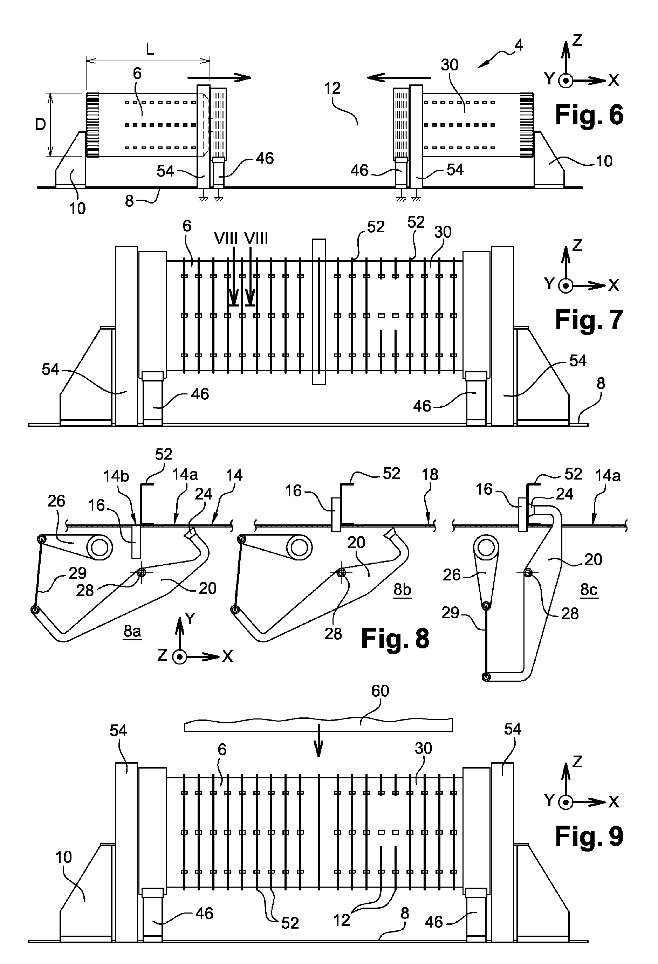

Nous allons décrire un mode de réalisation d'une installation selon l'invention pour la réalisation d'un aéronef. L'aéronef est en l'espèce un aérodyne et, dans le présent exemple, un avion comprenant un fuselage 2 dont un tronçon a été illustré sur les figures 6 à 12.

On utilise dans la suite le repère traditionnel X, Y et Z dans lequel la direction X désigne la direction longitudinale du fuselage, la direction Y la direction horizontale transversale et la direction Z la direction verticale.

Le fuselage présente une section de forme généralement circulaire dans un plan perpendiculaire à sa direction longitudinale X. Il est composé de plusieurs tronçons du type de celui dont nous allons présenter la fabrication, ces tronçons étant ensuite fixés bout à bout.

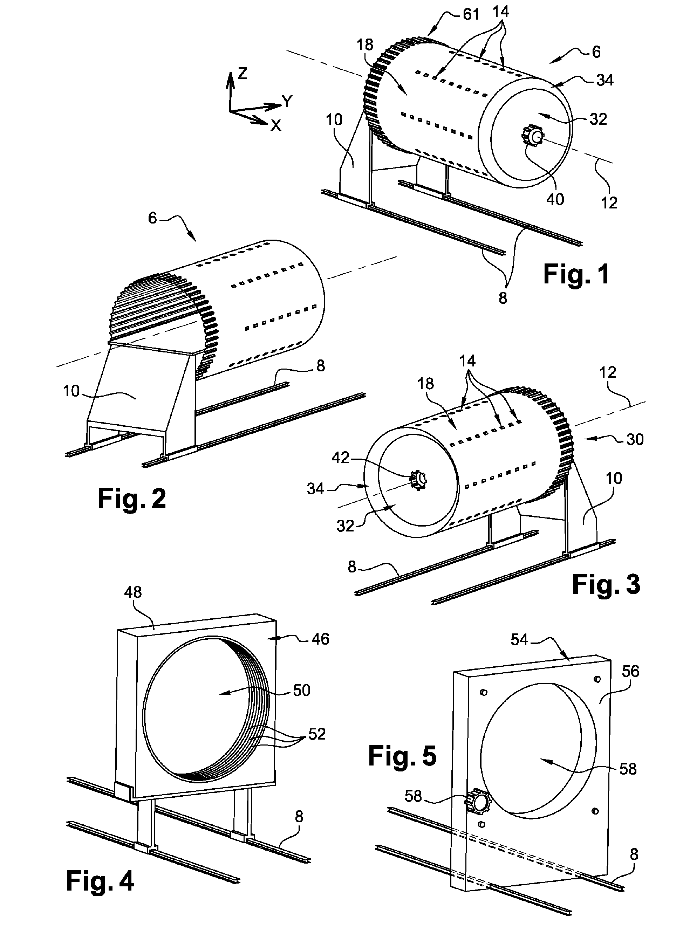

L'ensemble de l'installation 4 a été notamment illustré à la figure 6. En référence aux figures 1 à 2, l'installation comprend, dans le présent exemple, un premier mandrin 6 et deux rails 8 parallèles à la direction X et fixés au sol. Le mandrin est fixé à un support 10 par l'intermédiaire duquel il est monté mobile à coulissement sur les rails 8 suivant la direction X. Le mandrin présente une face latérale de forme générale cylindrique dont l'axe 12 est parallèle à la direction X et la section perpendiculairement à cet axe a une forme générale circulaire. Le mandrin est monté mobile à rotation autour de son axe longitudinal qui correspond à l'axe 12 du cylindre. La figure 1 montre l'avant du mandrin et la figure 2 l'arrière du mandrin. Le mandrin 6 présente une face frontale plane 32 perpendiculaire à l'axe 12. La jonction entre la face frontale 32 et la face latérale 18 est faite par un chanfrein 34.

Le mandrin présente sur sa paroi cylindrique des orifices 14 répartis en plusieurs rangées parallèles à l'axe 12. Les rangées sont ici au nombre de huit et régulièrement disposées autour de l'axe 12. Elles comprennent chacune plusieurs orifices, en l'espèce au nombre de neuf dans chaque rangée. Ce nombre peut varier en fonction du nombre de cadres du tronçon (voir plus bas), c'est-à-dire de la longueur du tronçon à assembler. Les orifices des rangées forment des rangs s'étendant dans des plans successifs respectifs perpendiculaires à l'axe 12. Comme illustré à la figure 8, chaque orifice 14 a une forme rectangulaire. Il présente une partie avant 14a et une partie arrière 14b séparées l'une de l'autre suivant la direction X par une partie de paroi du mandrin.

Le mandrin 6 comprend des moyens de fixation 16, 20, solidaires du mandrin, aptes à retenir des cadres 52 du fuselage sur le mandrin, comme on le verra plus loin. Ces moyens comprennent des éléments montés mobiles sur le mandrin entre une position rétractée et une position étendue dans laquelle ils s'étendent davantage en saillie du mandrin, suivant une direction radiale à l'axe 12, qu'en position rétractée. En l'espèce, ces éléments comprennent des pions 16 de forme rectiligne allongée orientés suivant la direction radiale. En position rétractée comme à la figure 8a, les pions s'étendent dans le mandrin sans dépasser de la face 18 du mandrin. En position étendue comme aux figures 8b et 8c, une portion des pions 16 s'étend en saillie de cette face, et ce à travers la partie 14b de l'orifice. Les pions 16 sont aptes à venir en appui contre une zone arrière des cadres 52.

Les moyens de fixation comprennent également des éléments 20 aptes à venir en appui contre une zone avant des cadres. Dans le présent exemple, ces éléments comprennent des sauterelles 20 en forme de crochet dont l'extrémité libre externe présente une platine 24. La sauterelle est montée mobile à rotation autour d'un axe 28, localement parallèle à une direction circonférentielle du mandrin. Il s'étend donc dans un plan parallèle aux directions Y et Z. En référence aux figures 8a et 8b, la sauterelle peut ainsi occuper une position rétractée dans laquelle elle s'étend à l'intérieur du mandrin sans dépasser de la face 18. En position étendue à la figure 8c, la sauterelle 20 s'étend à travers la partie avant 14a de l'orifice, en saillie de la face 18 du mandrin. A chaque orifice 14 du mandrin est donc associé un ensemble à pion 16 et sauterelle 20.

Un mécanisme adapté est prévu à l'intérieur du mandrin pour permettre l'actionnement de ces éléments dans le cadre du procédé que l'on présentera plus loin. Notamment, la sauterelle peut être manoeuvrée au moyen d'une manivelle rotative 26 et par l'intermédiaire d'une bielle 29. L'axe de rotation de la manivelle est parallèle à l'axe 28.

En l'espèce, l'installation 4 comprend un deuxième mandrin 30 qui est constitué de la même façon que le premier mandrin 6, sauf en ce qui concerne les caractéristiques suivantes. Le deuxième mandrin 30 présente lui aussi une face frontale 32, mais celle-ci s'étend en retrait d'un bord avant de la face latérale 18 pour ménager une cavité à l'avant du mandrin. Un chanfrein sépare à nouveau les faces 32 et 18 sur le deuxième mandrin. Alors que le premier mandrin 6 est conformé comme une partie mâle, le deuxième mandrin 30 est conformé comme une partie femelle apte à recevoir la partie mâle du premier mandrin, les parois frontales 32 venant en contact surfacique l'une avec l'autre, de même que les deux chanfreins coniques 34. Les deux mandrins peuvent ainsi être disposés de façon coaxiale dans le prolongement l'un de l'autre.

L'installation comprend des moyens pour mettre en prise les deux mandrins en rotation, par exemple si l'on souhaite entraîner en rotation un mandrin par l'autre. En l'espèce, ces moyens comprennent une roue cannelée ou un crabot 40 s'étendant en saillie de la face frontale 32 du premier mandrin et apte à pénétrer dans un évidement 42 de la face frontale 32 du deuxième mandrin. L'évidement 42 présente une forme femelle en correspondance avec la forme mâle de la roue 40. Lorsque les deux mandrins sont accouplés, la roue du premier mandrin est en prise avec le deuxième par engrènement dans l'évidement 42, en rotation autour de l'axe 12.

En référence à la figure 4, l'installation 4 comprend un magasin 46 pour le premier mandrin et un deuxième magasin 46, identique au premier, pour le deuxième mandrin. Chaque magasin comprend un boîtier 48 en forme générale de parallélépipède rectangle. Ce boîtier est plat et s'étend principalement dans un plan parallèle aux directions Y et Z. Il présente une ouverture 50 en son centre. Le magasin est apte à recevoir des cadres 52 du fuselage. Les cadres 52 sont de forme plane et circulaire. Ils sont reçus dans l'ouverture en étant disposés chacun dans un plan vertical perpendiculaire à la direction X. Les cadres sont ainsi stockés parallèlement et coaxialement les uns aux autres, en contact les uns avec les autres et à la suite les uns des autres.

L'installation comprend également deux bâtis 54 associés aux mandrins 6 et 30 respectifs. Chaque bâti 54 présente un boîtier 56 présentant une forme analogue au boîtier 48 des magasins. Au moins l'un des bâtis comprend des moyens d'entraînement 58 permettant d'entraîner en rotation le mandrin associé lorsqu'il est reçu à travers l'ouverture centrale 58 du bâti. A cette fin, ces moyens comprennent une roue contiguë à l'ouverture et dont la denture peut venir en engrènement avec une denture 61 prévue en l'espèce à l'extrémité arrière de la face latérale 18 du mandrin. Il suffit que l'un des bâtis comprenne de tels moyens d'entraînement, l'autre bâti assurant un simple guidage en rotation. Il est sinon possible que les deux bâtis en soient dotés.

En référence à la figure 6, de préférence, on donne à chaque mandrin une longueur totale L inférieure à deux fois son diamètre hors tout D. De préférence, cette longueur L sera même inférieure à 1,5 fois ce diamètre et par exemple inférieure ou égale à ce diamètre. On évite ainsi de constituer les mandrins avec un porte-à-faux trop important qui générerait une flèche de cet outillage sous son propre poids avec celui du fuselage.

L'installation comprend également des moyens de commande qui peuvent être automatisés en tout ou partie et qui permettent de mettre en oeuvre le procédé d'assemblage, comme on va le présenter maintenant en référence aux figures 6 à 12.

Dans une première étape non illustrée, on approvisionne chacun des magasins 46 avec plusieurs cadres 52. On effectue en l'espèce cet approvisionnement à distance de la chaîne de montage en déplaçant préalablement le magasin pour l'éloigner des autres pièces de l'installation 4. Une fois le magasin approvisionné, on le remet en place sur les rails 8.

Dans une deuxième étape illustrée à la figure 6, les différents éléments de l'installation sont disposés sur les rails 8 dans cet ordre en partant de la gauche :
- le premier mandrin 6 avec son support 10 à sa gauche,
- le bâti associé 54,
- le magasin 46 associé,
puis, séparés par un espace de ces premiers éléments,
- le magasin 46 associé au deuxième mandrin 30,
- le bâti 54 associé à ce deuxième mandrin, et
- le deuxième mandrin et son support à sa droite.

Les deux supports 10 sont les deux parties de l'installation les plus éloignées l'une de l'autre sur les rails 8. Le bâti 54 associé au premier mandrin est en butée suivant la direction X contre la face arrière du magasin 46 qui lui sert de référence de position. L'extrémité avant du premier mandrin 6 pénètre dans l'ouverture 58 du bâti, mais pas encore dans l'ouverture 50 du magasin. Les éléments associés au deuxième mandrin 30, y compris ce dernier, sont symétriques de ceux associés au premier mandrin 6 dans l'installation par référence à un plan de symétrie parallèle aux directions Y et Z.

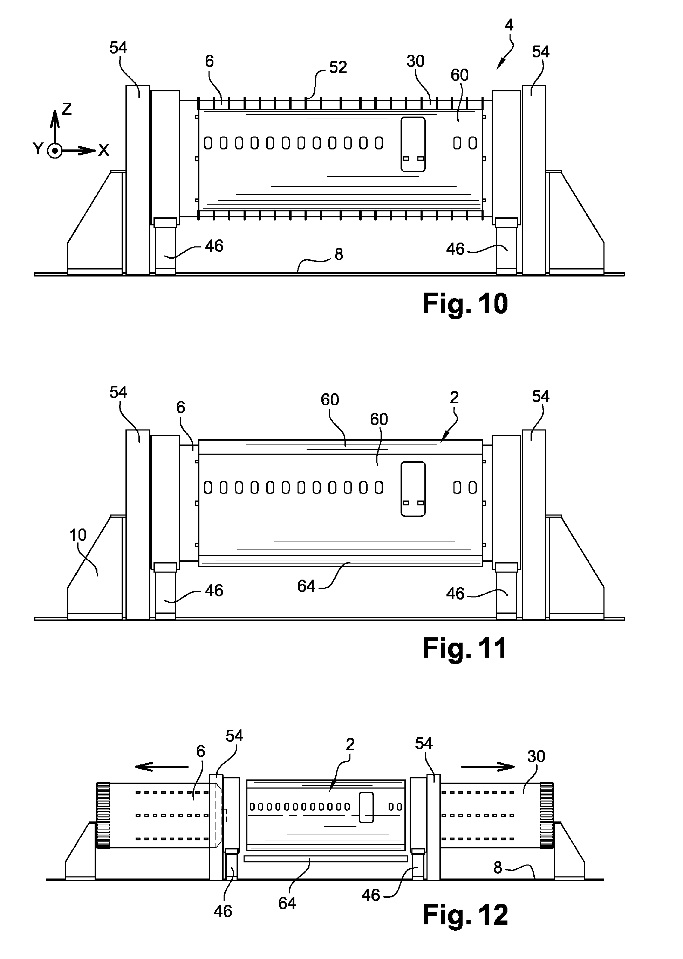

A ce stade de la fabrication et jusqu'à l'étape de la figure 12 incluse, les magasins 46 et les bâtis 54 sont fixés rigidement sur les rails 8 en étant immobiles par rapport au sol et les uns par rapport aux autres. Dans la suite, seuls les mandrins 6 et 30 sont mobiles sur les rails suivant la direction X. Les pions 16 et les pièces 20 sont initialement en position rétractée.

Au cours de la deuxième étape dont la figure 7 présente l'achèvement, on fait passer le premier mandrin 6 à travers le bâti 54 et le magasin 46 associé en déplaçant le premier mandrin sur les rails 8. On fait de même pour l'autre mandrin de sorte que les deux mandrins se déplacent en direction l'un de l'autre jusqu'à être en contact l'un avec l'autre et à s'accoupler comme illustré sur la figure 7.

Pour chaque mandrin, au cours de ce déplacement, on actionne les moyens 16 et 20 de sorte que les pions 16 situés au premier rang dans chaque rangée s'étendent radialement au moment où ils viennent en regard de l'interstice entre les premier et deuxième cadres 52 du magasin 46, ces cadres étant les plus éloignés du support 10. Cette extension peut être facilitée en donnant une forme en biseau à l'extrémité distale des pions 16. L'extension des pions 16 permet ainsi au mandrin d'emmener, au cours de son passage, le premier cadre 52 dans la série. Lorsque cette prise a débuté, la sauterelle 20 passe elle aussi en position étendue. Le cadre 52 se trouve ainsi rigidement maintenu en position sur le mandrin au niveau de sa face arrière par le pion 16 et au niveau de sa face avant par la sauterelle 20. On pourra prévoir également des moyens spécifiques pour bloquer toute rotation du cadre par rapport au mandrin autour de l'axe X.

Lorsque les orifices 14 du deuxième rang dans les rangées arrivent en regard de l'interstice entre les deux cadres les plus en avant parmi ceux demeurant dans le magasin, les pions correspondants 16 passent eux aussi en position étendue pour emmener de la même façon sur le mandrin le cadre 52 le plus en avant. Les sauterelles 20 associées passent ensuite en position étendue.

Les différents cadres sont ainsi transférés progressivement du magasin au mandrin associé. Au cours de ce transfert, les cadres sont disposés en regard des orifices 14 respectifs. Leur espacement mutuel devient donc plus élevé que l'espacement mutuel qu'ils avaient en étant stockés dans le magasin 46. Dans le présent exemple, cet espacement correspond à celui que les cadres auront en position finale sur l'avion.

Comme illustré à la figure 7, à la fin de cette étape, tous les cadres 52 ont été déchargés des magasins (qui sont maintenant vides) et se trouvent répartis sur les mandrins. Ceux-ci sont accouplés et leurs faces 18 forment une surface cylindrique continue.

Dans une étape ultérieure illustrée à la figure 9, on amène sur l'installation une peau 60, en l'espèce par le haut et suivant une direction radiale à l'axe 12. Cette peau comprend de préférence des lisses pré-assemblées sur la peau. La peau est disposée sur les cadres 52 et fixée à ces derniers. Les lisses s'étendent suivant la direction X.

Grâce aux bâtis 54, on fait ensuite tourner les deux mandrins avec les cadres et la peau 60 qu'ils portent, comme illustré à la figure 10. Cette rotation permet aux opérateurs d'avoir une meilleure accessibilité à la peau 60. On assemble cette dernière aux cadres en utilisant par exemple des rivets aveugles qui permettent une installation uniquement depuis l'extérieur.

En référence à la figure 11, on installe ensuite une autre peau 60 suivant le même mode que celui illustré à la figure 9. Cette peau vient occuper un emplacement du tronçon décalé angulairement par rapport à celui occupé par la première peau. On dispose ainsi tous les éléments de peau sur le tronçon en cours de réalisation.

En référence à la figure 12, on positionne ensuite, sous le tronçon de fuselage entre les deux magasins, un berceau 64 pour qu'il supporte le tronçon ainsi réalisé. On peut alors, après avoir rétracté les pions et les sauterelles, éloigner les deux mandrins l'un de l'autre suivant la direction X et libérer le tronçon. On évacue ensuite de l'installation le tronçon porté par le berceau.

On peut ensuite mettre en oeuvre les mêmes étapes pour fabriquer un autre tronçon 2.

L'invention est particulièrement adaptée à la réalisation de tronçons de fuselage ayant des panneaux de peau de grande dimension, afin de maximiser l'intérêt de l'automatisation (d'où l'utilisation de deux mandrins pour supporter le poids de l'outillage), et ce que ces panneaux soient faits en matériau composite ou en métal.

Bien entendu, on pourra apporter à l'invention de nombreuses modifications sans sortir du cadre de celle-ci.

On pourra mettre en oeuvre l'invention au moyen d'un seul mandrin par exemple supporté en porte-à-faux sur les rails 8.

Les moyens de transfert des cadres des magasins aux mandrins forment ici une partie des moyens de retenue des cadres sur les mandrins. Mais on pourrait prévoir que les moyens de transfert sont distincts des moyens de retenue, en étant par exemple portés par les magasins.

On pourra prévoir que le déplacement individuel des moyens de transfert est piloté par un opérateur, par exemple à distance.

## Revendications

1. Procédé de réalisation d'un aéronef, dans lequel on fait passer au moins un mandrin (6, 30) à travers des cadres (52) portés par un magasin (46), et au cours du passage on transfère les cadres sur le mandrin.

2. Procédé selon la revendication précédente dans lequel :
- on approvisionne le magasin (46) avec des cadres (52),
- on achemine le magasin, puis
- le magasin étant fixe, on fait passer le mandrin (6, 30) dans les cadres.

3. Procédé selon l'une quelconque des revendications précédentes dans lequel on fait passer le mandrin (6, 30) à travers le magasin (46).

4. Procédé selon l'une quelconque des revendications précédentes dans lequel on effectue le transfert de sorte que les cadres (52) présentent un espacement mutuel sur le mandrin supérieur à leur espacement mutuel dans le magasin, leur espacement mutuel sur le mandrin étant de préférence égal à leur espacement final dans l'aéronef.

5. Procédé selon l'une quelconque des revendications précédentes dans lequel on fait passer deux mandrins (6, 30) à travers des cadres (52) portés par deux magasins respectifs (46) en déplaçant les mandrins en direction l'un de l'autre et dans lequel, de préférence, on fixe les mandrins l'un à l'autre, notamment en les rendant solidaires en rotation.

6. Procédé selon l'une quelconque des revendications précédentes dans lequel on rapporte au moins une peau (60) sur les cadres (52).

7. Installation (4) de réalisation d'un aéronef, qui comprend au moins un mandrin (6, 30), **caractérisée en ce qu'**elle comprend :
- au moins un magasin à cadres (46), et
- des moyens (16, 20) pour transférer sur le mandrin (6, 30) des cadres (52) portés par le magasin lors d'un passage du mandrin à travers les cadres.

8. Installation (4) selon la revendication précédente dans laquelle les moyens de transfert (16, 20) sont portés par le mandrin (6, 30).

9. Installation (4) selon l'une quelconque des revendications 7 et 8, dans laquelle le mandrin (6, 30) comprend des moyens de fixation (16, 20) des cadres (52) au mandrin, ces moyens étant de préférence formés au moins en partie par les moyens de transfert.

10. Installation (4) selon la revendication précédente dans laquelle les moyens de fixation (16, 20) sont montés mobiles sur le mandrin entre une position rétractée et une position étendue dans laquelle ils s'étendent davantage en saillie du mandrin qu'en position rétractée, une partie des moyens de fixation étant par exemple montée mobile à rotation sur le mandrin autour d'un axe (28) localement parallèle à une direction circonférentielle du mandrin.

## Patentansprüche

1. Verfahren zur Herstellung eines Flugzeugs, bei dem wenigstens ein Dorn (6, 30) durch Rahmen (52), die von einem Magazin (46) getragen werden, hindurch geführt wird, und im Laufe der Durchführung die Rahmen auf den Dorn umgesetzt werden.

2. Verfahren nach dem vorhergehenden Anspruch, bei dem
- das Magazin (46) mit Rahmen (52) befüllt wird,
- das Magazin weitergeleitet wird und anschließend,
- wenn das Magazin feststehend ist, der Dorn (6, 30) in die Rahmen geführt wird.

3. Verfahren nach einem der vorhergehenden Ansprüche, bei dem der Dorn (6, 30) durch das Magazin (46) hindurch geführt wird.

4. Verfahren nach einem der vorhergehenden Ansprüche, bei dem die Umsetzung derart erfolgt, dass die Rahmen (52) einen gegenseitigen Abstand auf dem Dorn aufweisen, der größer als ihr gegenseitiger Abstand in dem Magazin ist, wobei ihr gegenseitiger Abstand auf dem Dorn bevorzugt gleich ihrem endgültigen Abstand in dem Flugzeug ist.

5. Verfahren nach einem der vorhergehenden Ansprüche, bei dem zwei Dorne (6, 30) durch Rahmen (52) hindurch geführt werden, die von zwei jeweiligen Magazinen (46) getragen werden, indem die Dorne zueinander hin bewegt werden, und bei dem die Dorne bevorzugt an einander befestigt werden, insbesondere indem sie drehfest verbunden werden.

6. Verfahren nach einem der vorhergehenden Ansprüche, bei dem mindestens eine Haut (60) auf die Rahmen (52) aufgebracht wird.

7. Anlage (4) zur Herstellung eines Flugzeugs, die wenigstens einen Dorn (6, 30) umfasst, **dadurch gekennzeichnet, dass** sie Folgendes umfasst:
- wenigstens ein Rahmen-Magazin (46) und
- Einrichtungen (16, 20), um Rahmen (52), die von dem Magazin getragen werden, bei einer Durchführung des Dorns durch die Rahmen hindurch auf den Dorn (6, 30) umzusetzen.

8. Anlage (4) nach dem vorhergehenden Anspruch, wobei die Umsetzungseinrichtungen (16, 20) von dem Dorn (6, 30) getragen werden.

9. Anlage (4) nach einem der Ansprüche 7 und 8, wobei der Dorn (6, 30) Einrichtungen zur Befestigung (16, 20) der Rahmen (52) an dem Dorn umfasst, wobei diese Einrichtungen bevorzugt wenigstens zum Teil durch die Umsetzungseinrichtungen gebildet sind.

10. Anlage (4) nach dem vorhergehenden Anspruch, wobei die Befestigungseinrichtungen (16, 20) an dem Dorn beweglich gelagert sind zwischen einer eingezogenen Position und einer ausgezogenen Position, in der sie sich von dem Dorn weiter vorspringend erstrecken als in der eingezogenen Position, wobei ein Teil der Befestigungseinrichtungen an dem Dorn zum Beispiel um eine Achse (28), die zu einer Umfangsrichtung des Dorns lokal parallel ist, drehbeweglich gelagert ist.

## Claims

1. A method of making an aircraft, wherein at least one mandrel (6, 30) is caused to pass through frames (52) carried by a magazine (46), with the frames being transferred onto the mandrel as it passes through.

2. A method according to the preceding claim, wherein:
- the magazine (46) is filled with frames (52);
- the magazine is put into place; and then
- with the magazine stationary, the mandrel (6, 30) is caused to pass through the frames.

3. A method according to claim 1, wherein the mandrel (6, 30) is caused to pass through the magazine (46).

4. A method according to any of the preceding claims, wherein the transfer is performed in such a manner that the frames (52) present mutual spacing on the mandrel that is greater than their mutual spacing in the magazine, their mutual spacing on the mandrel preferably being equal to their final spacing in the aircraft.

5. A method according to any of the preceding claims, wherein two mandrels (6, 30) are caused to pass through frames (52) carried by two respective magazines (46) by moving the mandrels towards each other, and wherein, preferably, the mandrels are fastened to one another, in particular by constraining them in rotation.

6. A method according to any of the preceding claims, wherein at least one skin (60) is fitted onto the frames (52).

7. An installation (4) for making an aircraft, wherein the installation comprises:
• at least one frame magazine (46);
• at least one mandrel (6, 30); and
• transfer means (16, 20) for transferring frames (52) carried by the magazine onto the mandrel (6, 30), while the mandrel is passing through the frames.

8. An installation (4) according to the preceding claim, wherein the transfer means (16, 20) are carried by the mandrel (6, 30).

9. An installation (4) according to claim 7 or claim 8, wherein the mandrel (6, 30) includes fastener means (16, 20) for fastening the frames (52) on the mandrel, said fastener means preferably being formed at least in part by the transfer means.

10. An installation (4) according to the preceding claim, wherein the fastener means (16, 20) are mounted on the mandrel to move between a retracted position and an extended position in which they project farther from the mandrel than when in the retracted position, for example a portion of the fastener means being pivotally mounted on the mandrel about an axis (28) that is locally parallel to a circumferential direction of the mandrel.
